# EUROPÄISCHE PATENTSCHRIFT

(11) **EP 4 003 702 B1**
(45) Veröffentlichungstag und Bekanntmachung des Hinweises auf die Patenterteilung: **09.10.2024**
(21) Anmeldenummer: 20743123.0
(22) Anmeldetag: 17.07.2020
(51) Int. Cl.: B29C 65/08, B29K 101/12, B29L 31/30

(54) **VERFAHREN ZUM VERBINDEN ZWEIER BAUTEILE AUS EINEM THERMOPLASTISCHEN KUNSTSTOFFMATERIAL**
METHOD FOR CONNECTING TWO COMPONENTS MADE OF A THERMOPLASTIC MATERIAL
PROCÉDÉ DE LIAISON DE DEUX COMPOSANTS EN MATÉRIAU THERMOPLASTIQUE

(30) Priorität: 30.07.2019 DE 102019120591
(43) Veröffentlichungstag der Anmeldung: 01.06.2022
(73) Patentinhaber: Airbus Operations GmbH, 21129 Hamburg (DE)
(72) Erfinder: STÖVEN, Timo, 21129 Hamburg (DE); KÖHLER, Filipp, 21129 Hamburg (DE)
(86) Internationale Anmeldenummer: PCT/EP2020/070328
(87) Internationale Veröffentlichungsnummer: WO 2021/018638

(56) Entgegenhaltungen:
- JP-A- S5 916 495

## Beschreibung

Die vorliegende Anmeldung betrifft ein Verfahren zum Verbinden zweier Bauteile aus einem thermoplastischen Kunststoffmaterial, bei dem die beiden Bauteile miteinander in Kontakt gebracht und anschließend mittels Ultraschallverschweißens miteinander verschweißt werden.

Thermoplastische Kunststoffmaterialien kommen in faserverstärkter Form und nicht faserverstärkter Form in vielen Gebieten der Technik und Anwendungen zum Einsatz, wie zum Beispiel in der Luftfahrt- und Raumfahr- und Automobilindustrie. Aufgrund der thermoplastischen Eigenschaften können verschiedene aus solchen Kunststoffmaterialien hergestellte Bauteile oder Komponenten zur Herstellung größerer Konstruktionen und Strukturen miteinander verschweißt werden.

Ein bekanntes Schweißverfahren ist Ultraschallverschweißen, das jedoch hauptsächlich für nicht faserverstärkte Kunststoffmaterialien mit niedrigen oder mittleren Schmelztemperaturen von maximal 200 °C Verwendung findet. Demgegenüber hat sich der Einsatz von Ultraschallverschweißen in industriellem Maßstab für Bauteile aus faserverstärkten Kunststoffmaterialien und insbesondere faserverstärkten Hochleistungs-Kunststoffmaterialien, wie etwa PPS, PEI, PEEK oder PEKK, als schwierig herausgestellt. Um diese zu adressieren, sind Versuche vorgenommen worden, die Geometrie, Arbeitsfrequenz, Amplitude und andere Parameter der Ultraschallsonotrode und Prozessparameter, wie etwa Anpressdruck, Bauteilgeometrie und Verarbeitungszeit, zu optimieren. Eine signifikante Verbesserung der Qualität der Schweißverbindung ist jedoch nur durch das Anordnen von sog. Energierichtungsgebern zwischen den zu verschweißenden Bauteilen erreicht worden. Diese Energierichtungsgeber haben allerdings den Nachteil, dass vor dem Ultraschallverschweißen zweier Bauteile zwischen diesen separate Elemente in definierter Weise angeordnet werden müssen. Dadurch erhöhen sich der Arbeitsaufwand, die Verarbeitungszeit und die Kosten, und die Flexibilität bei der Ausgestaltung der Kombination der beiden miteinander verbundenen Bauteile wird eingeschränkt.

Das Dokument JPS5916495A offenbart ein Verfahren zum Verbinden einer Membran und einer Kante durch Selbstschmelzen und Verbinden der Membran und einer Kante, wobei Ultraschallenergie und Harz auf den überlappenden Teil angewendet wird und Konkavitäten und Konvexitäten auf der Verbindungsfläche des überlappenden Abschnitts der Membran oder der Kante, der Verbindungsfläche der Membran und der Kante vorgesehen sind. Die Unebenheiten, die auf der Verbindungsfläche des überlappenden Abschnitts der Membran oder des Randes vorgesehen sind, werden zur gleichen Zeit wie die Membran oder der Rand durch das Heißpressverfahren, das Vakuumformverfahren oder das Spritzgießverfahren gebildet.

Es ist daher eine Aufgabe der vorliegenden Erfindung, ein Verfahren zum Verbinden zweier Bauteile aus einem thermoplastischen Kunststoffmaterial mittels Ultraschallverschweißen bereitzustellen, das einfach, kostengünstig und flexibel durchführbar ist und durch das die Qualität der Schweißverbindung insbesondere bei faserverstärkten Hochleistungs-Kunststoffmaterialien weiter verbessert werden kann.

Diese Aufgabe wird durch ein Verfahren mit den Merkmalen des Anspruchs 1 und durch eine Verwendung eines Bauteils aus einem thermoplastischen Kunststoffmaterial mit den Merkmalen des Anspruchs 1 erfüllt. Vorteilhafte Ausführungsformen des Verfahrens sind Gegenstand der jeweiligen abhängigen Ansprüche.

Nach der vorliegenden Erfindung ist ein Verfahren zum Verbinden zweier Bauteile vorgesehen, bei dem ein erstes Bauteil und ein zweites Bauteil bereitgestellt werden, von denen jedes aus einem thermoplastischen Kunststoffmaterial ausgebildet ist. Das thermoplastische Kunststoffmaterial liegt demnach nach dem Bereitstellen und vor der Verbindung der beiden Bauteile in konsolidierter Form vor. Jedes der beiden Bauteile ist dabei bevorzugt vollständig aus dem thermoplastischen Kunststoffmaterial ausgebildet oder besteht aus diesem. Es ist aber auch möglich, dass eines oder beide der beiden Bauteile lediglich ein Teil oder ein Abschnitt eines größeren Bauteils ist, das neben dem Teil oder Abschnitt aus dem thermoplastischen Kunststoffmaterial noch weitere Teile oder Abschnitte aus einem oder mehreren anderen Materialien aufweist. Ein solches größeres Bauteil kann dann auch noch andere Teile oder Abschnitte aufweisen, die aus demselben oder einem anderen thermoplastischen Kunststoffmaterialien ausgebildet sind.

In jedem Fall weist das erste Bauteil ein erstes Abreißgewebe an einer ersten Oberfläche des ersten Bauteils auf. Die erste Oberfläche kann dabei die gesamte Oberfläche des ersten Bauteils auf einer Seite des ersten Bauteils sein oder nur ein Teil bzw. Abschnitt einer solchen Oberfläche, wie insbesondere der Teil bzw. Abschnitt, der mit dem zweiten Bauteil verschweißt wird. Ein Abreißgewebe ist in bekannter Weise ein Gewebe, das zum Beispiel aus textilen Fasern oder Filamenten, wie zum Beispiel Glasfasern bzw. -filamente oder Keramikfasern bzw. -filamente, die insbesondere im Fall von Hochleistungsthermoplasten in vorteilhafter Weise zur Anwendung kommen können, oder auch Nylon- bzw. Polyamid-Fasern oder -Filamenten, ausgebildet sein kann und das während der Herstellung vor dem Konsolidieren als Schicht an der Oberfläche eines Kunststoffbauteils angeordnet wird und nach der Verfestigung des Kunststoffmaterials entfernt werden kann. Im Fall von Bauteilen, die als Laminate und insbesondere als faserverstärkte Kunststofflaminate hergestellt werden, werden die Abreißgewebe während der Herstellung als erste oder letzte Schicht in das Laminat eingebracht. Durch das Entfernen bzw. Abreißen des Abreißgewebes wird an der entsprechenden Oberfläche eine gleichmäßig raue Oberfläche bereitgestellt, die ein Kleben oder Lackieren ohne Reinigen oder Anschleifen ermöglicht. Das Abreißgewebe ist bevorzugt ein gewebtes textiles Gebilde, kann aber ggf. auch ein nicht gewebtes flächiges Fasergebilde sein, zum Beispiel aus den oben genannten Fasermaterialien.

Dementsprechend wird das erste Abreißgewebe nach dem Bereitstellen des ersten Bauteils von dem ersten Bauteil entfernt bzw. abgerissen. Nach dem Entfernen des ersten Abreißgewebes wird die erste Oberfläche des ersten Bauteils mit einer zweiten Oberfläche des zweiten Bauteils in Kontakt gebracht. Mit anderen Worten werden das erste und das zweite Bauteil mit ihrer ersten und zweiten Oberfläche aneinander angelegt und bevorzugt mit einem definierten Anpressdruck aneinandergedrückt. Die erste und die zweite Oberfläche berühren sich somit unmittelbar, und es sind bevorzugt kein weiteres Material und keine weiteren Elemente zwischen der ersten und der zweiten Oberfläche angeordnet, insbesondere kein Klebematerial und keine separaten Energierichtungsgeber.

Anschließend werden das erste Bauteil und das zweite Bauteil an der ersten und zweiten Oberfläche durch Ultraschallschweißen miteinander verschweißt werden, d.h. während sie miteinander in Kontakt sind. Durch das Entfernen des Abreißgewebes von der ersten Oberfläche wird in dieser in vorteilhafter Weise ein Oberflächenprofil ausgebildet, das großflächig eine Anordnung einer Vielzahl von - bevorzugt ganz oder zumindest abschnittsweise gleichmäßig verteilten und gleichen - Erhebungen und Vertiefungen bzw. voneinander beabstandeter Vorsprünge aufweist. Diese können aufgrund ihrer Ausbildung durch die Fäden oder Filamente des Abreißgewebes in vorteilhafter Weise feine Strukturen sein, die einfach hergestellt und dabei - durch Wahl eines geeigneten Abreißgewebes - flexibel in Form, Abmessungen und Anordnung angepasst werden können. Es hat sich überraschend herausgestellt, dass die voneinander beabstandeten Erhebungen bzw. Vorsprünge als eine Vielzahl fein verteilter Energierichtungsgeber wirken. Sie sind bei dem Ultraschallverschweißen mit der zweiten Oberfläche in Kontakt und lenken die Ultraschallenergie in der Weise in den Kontaktbereich zwischen der ersten und zweiten Oberfläche, dass sie als eine Vielzahl fein verteilter Ultraschallkeime wirken und für eine gleichmäßigere Dissipation der Ultraschallenergie sorgen. Diese Erhebungen bzw. Vorsprünge weisen bevorzugt "Spitzen" auf und können beispielsweise pyramidenförmig oder in Form von langgestreckten Bergkämmen vorgesehen sein.

Auf diese Weise wird in vorteilhafter Weise eine Ultraschallschweißverbindung verbesserter Qualität hergestellt, und das Verfahren ist dennoch besonders einfach, kostengünstig und flexibel durchführbar. Insbesondere ist es nicht erforderlich, separate Schichten oder Elemente als Energierichtungsgeber zwischen den beiden zu verschweißenden Bauteilen anzuordnen oder derartige Energierichtungsgeber in einem separaten Schritt an der ersten Oberfläche des ersten Bauteils anzuformen.

In einer bevorzugten Ausführungsform ist das erste Bauteil und das zweite Bauteil jeweils ein Teil eines Flugzeugs. Insbesondere kann dann das erste Bauteil und das zweite Bauteil jeweils ein Abschnitt eines Rumpfes, eines Flügels, eines Leitwerks oder einer Steuerfläche des Flugzeugs sein. Beispielsweise kann eines von dem ersten und dem zweiten Bauteil ein Versteifungselement, wie z.B. ein Spant oder ein Stringer, sein und das andere von dem ersten und dem zweiten Bauteil eine Außenhaut oder ein weiteres Versteifungselement, wie z.B. ein Stringer oder ein Spant. Durch das Verfahren können auch Bauteile aus faserverstärkten und nicht faserverstärkten Kunststoffen unter Ausbildung einer Ultraschallschweißverbindung guter Qualität miteinander verbunden werden, wie sie in der Luft- und Raumfahrtindustrie und im Flugzeugbau zum Einsatz kommen.

In einer bevorzugten Ausführungsform ist das Abreißgewebe in der Weise ausgestaltet, dass durch das Entfernen des Abreißgewebes von der ersten Oberfläche in dieser in der oben beschriebenen Weise ein Oberflächenprofil ausgebildet wird, das eine Anordnung einer Vielzahl von Erhebungen und Vertiefungen bzw. voneinander beabstandeter Vorsprünge mit Abmessungen im Sub-Millimeterbereich aufweist, d.h. Abmessungen, die kleiner als 1 mm sind. Diese Abmessungen im Sub-Millimeterbereich liegen in einer oder zwei - dann bevorzugt zueinander senkrechten - Dimensionen entlang der ersten Oberfläche und bevorzugt auch in der Dimension senkrecht zu der ersten Oberfläche vor. Dadurch sind die Erhebungen bzw. Vorsprünge fein und weniger als 1 mm voneinander entfernt, wodurch eine besonders gleichmäßige Dissipation der Ultraschallenergie erreicht wird. Dabei ist es beispielsweise auch möglich, dass das Abreißgewebe in der Weise ausgestaltet ist oder wird, dass die beschriebenen Abmessungen kleiner als 0,9 mm, kleiner als 0,8 mm, kleiner als 0,7 mm, kleiner als 0,6 mm oder kleiner als 0,5 mm sind.

In einer bevorzugten Ausführungsform hat das thermoplastische Kunststoffmaterial des ersten Bauteils und/oder des zweiten Bauteils eine Schmelztemperatur von mehr als 200 °C und zum Beispiel von mindestens 220 °C. Im Fall eines faserverstärkten Kunststoffmaterials gilt diese Schmelztemperatur in üblicher Weise für das thermoplastische Matrixmaterial.

In einer bevorzugten Ausführungsform weist das thermoplastische Kunststoffmaterial des ersten Bauteils und/oder des zweiten Bauteils jeweils einen Hochleistungsthermoplast bzw. hochtemperaturbeständigen thermoplastischen Kunststoff auf oder ist ein solches Material. Zum Beispiel kann das thermoplastische Kunststoffmaterial des ersten Bauteils und/oder des zweiten Bauteils dann PPS, PEI, PEEK und/oder PEKK aufweisen oder sein. Bevorzugt gilt das sowohl für das erste Bauteil als auch für das zweite Bauteil, d.h. im Fall der genannten spezifischen thermoplastischen Kunststoffe weist dann das thermoplastische Kunststoffmaterial von sowohl dem ersten Bauteil als auch dem zweiten Bauteil jeweils PPS, PEI, PEEK und/oder PEKK auf oder ist bevorzugt PPS, PEI, PEEK und/oder PEKK.

In einer bevorzugten Ausführungsform ist das thermoplastische Kunststoffmaterial jeweils ein faserverstärktes Kunststoffmaterial, d.h. ein Faserverbundmaterial bzw. Faserverbundwerkstoff. Demnach ist in dieser Ausführungsform das jeweilige Bauteil ein Faserverbundbauteil. In diesem Fall gehören die Fasern zu dem thermoplastischen Kunststoffmaterial, auch wenn sie nicht selbst aus einem thermoplastischen Kunststoffmaterial ausgebildet sind. Bevorzugt gilt das für beide Bauteile, d.h. das thermoplastische Kunststoffmaterial von sowohl dem ersten Bauteil als auch dem zweiten Bauteil ist dann jeweils ein faserverstärktes Kunststoffmaterial. Die Fasern können dabei zum Beispiel Kohlenstoff-, Glasfasern- oder Aramidfasern sein, und es können Endlos-, Lang- oder Kurfasern Verwendung finden.

In einer bevorzugten Ausführungsform weist das Bereitstellen des ersten Bauteils auf, dass das erste Bauteil mit dem ersten Abreißgewebe an der ersten Oberfläche des ersten Bauteils hergestellt wird. Alternativ kann das erste Bauteil aus einer Vielzahl bereits hergestellter Bauteile mit einem Abreißgewebe ausgewählt werden. Wenn das Bereitstellen des ersten Bauteils die Herstellung des ersten Bauteils mit dem ersten Abreißgewebe an der ersten Oberfläche umfasst, ist es ferner bevorzugt, wenn das Abreißgewebe aus einer Vielzahl von Fäden bzw. Filamenten ausgebildet ist und bei dem Herstellen des ersten Bauteils mit dem Abreißgewebe ein oder mehrere Werte für einen oder mehrere Parameter aus der Gruppe ausgewählt werden, die aus Fadenabstand, Fadendurchmesser, Fadenform und Maschenweite besteht. Es wird dann bei dem Herstellen des ersten Bauteils anschließend als das Abreißgewebe ein Abreißgewebe ausgewählt oder hergestellt, das den ausgewählten Parameterwert bzw. die ausgewählten Parameterwerte aufweist. Die durch die Erhebungen bzw. Vorsprünge gebildeten Energierichtungsgeber können so in sehr einfacher und flexibler Weise an die jeweilige Anwendung und die dabei verwendeten Materialien und die dabei angestrebte Festigkeit der Schweißverbindung angepasst werden, indem gezielt ein Abreißgewebe mit entsprechenden Eigenschaften ausgewählt wird.

In einer bevorzugten Ausführungsform weist das zweite Bauteil ein zweites Abreißgewebe an der zweiten Oberfläche des zweiten Bauteils auf, und das Verfahren weist ferner den Schritt auf, vor dem Inkontaktbringen der ersten Oberfläche des ersten Bauteils mit der zweiten Oberfläche des zweiten Bauteils das zweite Abreißgewebe von dem zweiten Bauteil zu entfernen bzw. abzureißen. Für die Ausgestaltung des zweiten Abreißgewebes und das durch dessen Entfernung an der zweiten Oberfläche entstehende Oberflächenprofil gilt dasselbe, wie es für das erste Abreißgewebe und das durch dessen Entfernung an der ersten Oberfläche entstehende Oberflächenprofil erläutert worden ist. Das Bereitstellen des zweiten Bauteils kann dann bevorzugt aufweisen, dass das zweite Bauteil mit dem zweiten Abreißgewebe an der zweiten Oberfläche des zweiten Bauteils hergestellt wird.

Nach der vorliegenden Erfindung ist ferner vorgesehen, ein Bauteil, das aus einem thermoplastischen Kunststoffmaterial ausgebildet ist und das mit einem Abreißgewebe an einer Oberfläche des Bauteils hergestellt ist, als erstes Bauteil oder zweites Bauteil nach einer der oben beschriebenen Ausführungsformen zu verwenden. Dann ist das Abreißgewebe des Bauteils das erste bzw. zweite Abreißgewebe, und die Oberfläche des Bauteils mit dem Abreißgewebe ist die erste bzw. die zweite Oberfläche.

Nachfolgend wird die Erfindung unter Bezugnahme auf die Figuren näher erläutert, in denen ein Ausführungsbeispiel dargestellt ist.
Figur 1 zeigt die Bereitstellung eines ersten Bauteils aus faserverstärktem Kunststoffmaterial mit einem Abreißgewebe gemäß einem Ausführungsbeispiel der vorliegenden Erfindung,
Figur 2 zeigt das erste Bauteil der Figur 1 nach dem Entfernen des Abreißgewebes und dem anschließenden Inkontaktbringen mit einem zweiten Bauteil aus faserverstärktem Kunststoffmaterial, und

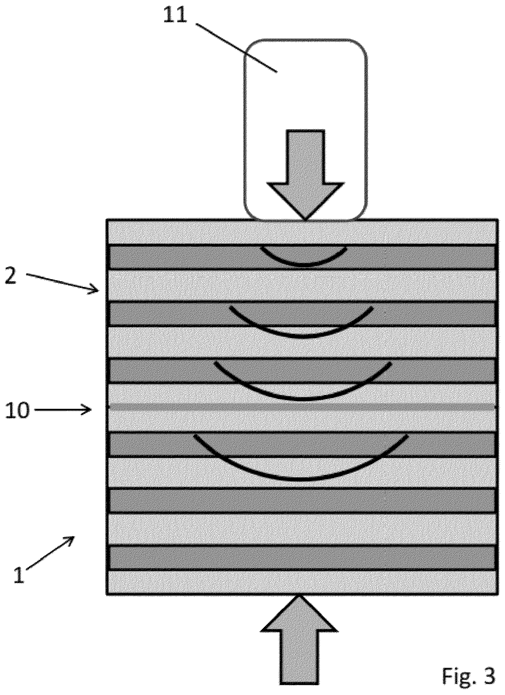

Figur 3 zeigt das erste und das zweite Bauteil der Figur 2 nach dem Ultraschallverschweißen mit Hilfe einer Ultraschallsonotrode.

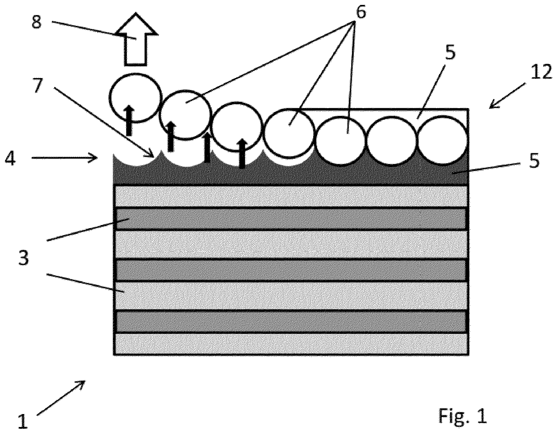

Figur 1 zeigt ein erstes Bauteil 1, das aus faserverstärktem thermoplastischen Kunststoffmaterial ausgebildet ist. Es ist in Form eines Laminats aus einer Vielzahl übereinander angeordneter Schichten 3 aus jeweils einem faserverstärkten Kunststoffmaterial vorgesehen. Der Übersichtlichkeit halber sind nur zwei der Schichten 3 mit dem Bezugszeichen versehen. Verschiedene Schichten können aus demselben faserverstärkten Kunststoffmaterial oder aus unterschiedlichen faserverstärkten Kunststoffmaterialien ausgebildet sein. Zum Beispiel können sich Schichten 3 aus zwei unterschiedlichen faserverstärkten Kunststoffmaterialien entlang der Stapelrichtung abwechseln. Das erste Bauteil 1 weist in einer Oberflächenschicht 4 ein Abreißgewebe 6 auf, das in eine Matrix 5 aus einem thermoplastischen Kunststoffmaterial eingebettet ist. Das Abreißgewebe 6 ist somit an einer ersten Oberfläche 12 des ersten Bauteils 1 abgeordnet.

Das erste Bauteil 1 wird in einem ersten Verfahrensschritt bereitgestellt, indem es zum Beispiel aus einer Vielzahl bereits hergestellter Bauteile der erläuterten Ausgestaltung ausgewählt wird oder indem es durch Aufbau des Laminats hergestellt wird.

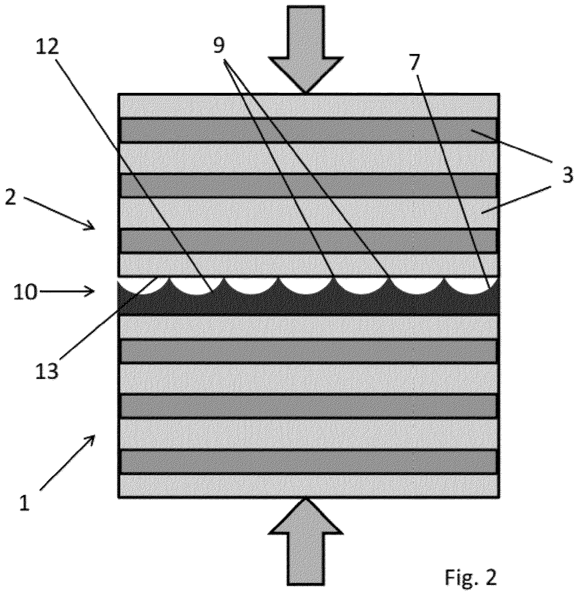

Anschließend wird das Abreißgewebe 6 durch Ausübung einer Abziehkraft 8 von dem ersten Bauteil 1 entfernt, wodurch in der ersten Oberfläche 12 ein Oberflächenprofil 7 entsteht, das eine Vielzahl voneinander beabstandeter spitzer Vorsprünge 9 aufweist (siehe auch Figur 2). Wie aus Figur 1 ersichtlich ist, werden die Form, die Abmessungen und die Anordnung der Vorsprünge 9 durch die Form, die Abmessungen und die Abstände der Fäden bzw. Filamente des Abreißgewebes 6 bestimmt.

Nach dem Entfernen des Abreißgewebes 6 wird das erste Bauteil 1 mit seiner ersten Oberfläche 12 bzw. genauer den Vorsprüngen 9 in Kontakt mit einer zweiten Oberfläche 13 eines zweiten Bauteils 2 gebracht, das - mit Ausnahme des Fehlens des Abreißgewebes 6 - in derselben Weise wie das in Figur 1 gezeigte erste Bauteil 1 aufgebaut und zuvor bereitgestellt worden ist. Das erste Bauteil 1 und das zweite Bauteil 2 im miteinander in Kontakt gebrachten Zustand sind in Figur 2 gezeigt. Der Kontaktbereich zwischen den beiden Bauteilen 1, 2 ist durch das Bezugszeichen 10 gekennzeichnet. Das erste Bauteil 1 und das zweite Bauteil 2 werden durch Ausüben von durch die Pfeile gekennzeichnete Kräfte gegeneinander gedrückt.

Anschließend wird eine Ultraschallsonotrode 11 mit zum Beispiel dem zweiten Bauteil 2 in Kontakt gebracht. Wenn nun von der Ultraschallsonotrode 11 Ultraschallenergie in die Kombination aus erstem und zweitem 1,2 eingebracht wird, wirken die Vorsprünge 9 als Energierichtungsgeber und Keime zur gleichmäßigen Dissipation der Ultraschallenergie, so dass das thermoplastische Matrixmaterial im Kontaktbereich 10 gleichmäßig aufgeschmolzen und miteinander verschweißt wird.

## Patentansprüche

1. Verfahren zum Verbinden zweier Bauteile (1, 2), bei dem
- ein erstes Bauteil (1) und ein zweites Bauteil (2) bereitgestellt werden, die jeweils aus einem thermoplastischen Kunststoffmaterial (3) ausgebildet sind, wobei das erste Bauteil (1) ein erstes Abreißgewebe (6) an einer ersten Oberfläche (12) des ersten Bauteils (1) aufweist,
- das erste Abreißgewebe (6) von dem ersten Bauteil (1) entfernt wird,
- nach dem Entfernen des ersten Abreißgewebes (6) die erste Oberfläche (12) des ersten Bauteils (1) mit einer zweiten Oberfläche (13) des zweiten Bauteils (2) in Kontakt gebracht wird und
- anschließend das erste Bauteil (1) und das zweite Bauteil (2) an der ersten und zweiten Oberfläche (12, 13) durch Ultraschallschweißen miteinander verschweißt werden.

2. Verfahren nach Anspruch 1, bei dem das erste und das zweite Bauteil (1, 2) jeweils ein Teil eines Flugzeugs ist.

3. Verfahren nach Anspruch 2, bei dem das erste und das zweite Bauteil (1, 2) jeweils ein Abschnitt eines Rumpfes, eines Flügels, eines Leitwerks oder einer Steuerfläche des Flugzeugs ist.

4. Verfahren nach Anspruch 2 oder Anspruch 3, bei dem eines von dem ersten und dem zweiten Bauteil (1, 2) ein Versteifungselement ist und das andere von dem ersten und dem zweiten Bauteil (1, 2) eine Außenhaut oder ein weiteres Versteifungselement ist.

5. Verfahren nach einem der vorhergehenden Ansprüche, bei dem das Abreißgewebe (6) in der Weise ausgestaltet ist, dass durch das Entfernen des Abreißgewebes (6) von der ersten Oberfläche (12) in dieser ein Oberflächenprofil (7) ausgebildet wird, das eine Anordnung einer Vielzahl von Erhebungen (9) und Vertiefungen mit Abmessungen im Sub-Millimeterbereich aufweist.

6. Verfahren nach einem der vorhergehenden Ansprüche, bei dem das thermoplastische Kunststoffmaterial (3) des ersten Bauteils (1) und/oder des zweiten Bauteils (2) eine Schmelztemperatur von mehr als 200 °C hat.

7. Verfahren nach einem der vorhergehenden Ansprüche, bei dem das thermoplastische Kunststoffmaterial (3) des ersten Bauteils (1) und/oder des zweiten Bauteils (2) PPS, PEI, PEEK und/oder PEKK aufweist.

8. Verfahren nach einem der vorhergehenden Ansprüche, bei dem das thermoplastische Kunststoffmaterial (3) jeweils ein faserverstärktes Kunststoffmaterial ist.

9. Verfahren nach einem der vorhergehenden Ansprüche, bei dem das Bereitstellen des ersten Bauteils (1) aufweist, dass das erste Bauteil (1) mit dem ersten Abreißgewebe (6) an der ersten Oberfläche (12) des ersten Bauteils (1) hergestellt wird.

10. Verfahren nach Anspruch 9, bei dem das Abreißgewebe (6) aus einer Vielzahl von Fäden ausgebildet ist und bei dem das Herstellen des ersten Bauteils mit dem Abreißgewebe (6) aufweist, mindestens einen Wert für mindestens einen Parameter aus der Gruppe auszuwählen, die aus Fadenabstand, Fadendurchmesser, Fadenform und Maschenweite besteht, und als das Abreißgewebe (6) ein Abreißgewebe (6) auszuwählen oder herzustellen, das die ausgewählten Parameterwerte aufweist.

11. Verfahren nach einem der vorhergehenden Ansprüche, bei dem das zweite Bauteil (2) ein zweites Abreißgewebe (6) an der zweiten Oberfläche (13) des zweiten Bauteils aufweist und bei dem ferner vor dem Inkontaktbringen der ersten Oberfläche (12) des ersten Bauteils (1) mit der zweiten Oberfläche (13) des zweiten Bauteils (2) das zweite Abreißgewebe (6) von dem zweiten Bauteil (2) entfernt wird.

12. Verfahren nach Anspruch 11, bei dem das Bereitstellen des zweiten Bauteils (2) aufweist, dass das zweite Bauteil (2) mit dem zweiten Abreißgewebe (6) an der zweiten Oberfläche (13) des zweiten Bauteils (2) hergestellt wird.

13. Verwendung eines Bauteils, das aus einem thermoplastischen Kunststoffmaterial (3) ausgebildet ist und das mit einem Abreißgewebe (6) an einer Oberfläche (12, 13) des Bauteils hergestellt ist, als erstes Bauteil (1) oder zweites Bauteil (2) nach einem der vorhergehenden Ansprüche.

## Claims

1. Method for joining two components (1, 2), in which
- a first component (1) and a second component (2) are provided, which are each formed from a thermoplastic material (3), the first component (1) has a first tear-off fabric (6) on a first surface (12) of the first component (1),
- the first tear-off fabric (6) is removed from the first component (1),
- after the removal of the first tear-off fabric (6), the first surface (12) of the first component (1) is brought into contact with a second surface (13) of the second component (2), and
- the first component (1) and the second component (2) are welded together at the first and second surfaces (12, 13) by ultrasonic welding.

2. The method according to claim 1, wherein each of the first and second components (1, 2) is a part of an aircraft.

3. The method according to claim 2, wherein the first and second components (1, 2) are each a section of a fuselage, a wing, an empennage or a control surface of the aircraft.

4. The method according to claim 2 or claim 3, wherein one of the first and second components (1, 2) is a stiffening element and the other of the first and second components (1, 2) is an outer skin or a further stiffening element.

5. Method according to one of the preceding claims, in which the tear-off fabric (6) is designed in such a way that, by removing the tear-off fabric (6) from the first surface (12), a surface profile (7) is formed therein, which has an arrangement of a plurality of projections (9) and recesses with dimensions in the sub-millimeter range.

6. Method according to one of the preceding claims, wherein the thermoplastic material (3) of the first component (1) and/or of the second component (2) has a melting temperature of more than 200 °C.

7. Method according to one of the preceding claims, wherein the thermoplastic material (3) of the first component (1) and/or of the second component (2) comprises PPS, PEI, PEEK and/or PEKK.

8. Method according to one of the preceding claims, in which the thermoplastic plastic material (3) is a fiber-reinforced plastic material in each case.

9. The method according to any one of the preceding claims, wherein providing the first component (1) comprises producing the first component (1) with the first tear-off fabric (6) on the first surface (12) of the first component (1).

10. Method according to claim 9, in which the tear-off fabric (6) is formed from a plurality of threads and in which the production of the first component (1) with the first tear-off fabric (6) comprises selecting at least one value for at least one parameter from the group consisting of thread spacing, thread diameter, thread shape and mesh size, and selecting or producing as the tear-off fabric (6) a tear-off fabric (6) which has the selected parameter values.

11. Method according to one of the preceding claims, wherein the second component (2) comprises a second tear-off fabric (6) on the second surface (13) of the second component (2), and wherein further the second tear-off fabric (6) is removed from the second component (2) before bringing the first surface (12) of the first component (1) into contact with the second surface (13) of the second component (2).

12. The method according to claim 11, wherein providing the second component (2) comprises producing the second component (2) with the tear-off fabric (6) on the second surface (13) of the second component (2).

13. Use of a component, which is formed from a thermoplastic material (3) and which is produced with a tear-off fabric (6) on a surface (12, 13) of the component as a first component (1) or second component (2) according to one of the preceding claims.

## Revendications

1. Procédé pour assembler deux composants (1, 2), dans lequel
- il est prévu un premier composant (1) et un deuxième composant (2), qui sont chacun formés à partir d'un matériau thermoplastique (3), le premier composant (1) présente un premier tissu déchirable (6) sur une première surface (12) du premier composant (1),
- le premier tissu déchirable (6) est retiré du premier composant (1),
- après le retrait du premier tissu déchirable (6), la première surface (12) du premier composant (1) est mise en contact avec une deuxième surface (13) du deuxième composant (2), et
- le premier composant (1) et le deuxième composant (2) sont soudés ensemble au niveau des première et deuxième surfaces (12, 13) par soudage par ultrasons.

2. Procédé selon la revendication 1, dans lequel chacun des premier et deuxième composants (1, 2) fait partie d'un aéronef.

3. Procédé selon la revendication 2, dans lequel les premier et deuxième composants (1, 2) sont chacun une section d'un fuselage, d'une aile, d'un empennage ou d'une gouverne de l'aéronef.

4. Procédé selon la revendication 2 ou la revendication 3, dans lequel l'un des premier et deuxième composants (1, 2) est un élément de raidissement et l'autre des premier et deuxième composants (1, 2) est une peau externe ou un autre élément de raidissement.

5. Procédé selon l'une des revendications précédentes, dans lequel le tissu déchirable (6) est conçu de telle sorte que, lors du retrait du tissu déchirable (6) de la première surface (12), un profil de surface (7 ) est formé à l'intérieur, qui présente un agencement d'une pluralité de saillies (9) et d'évidements ayant des dimensions dans la plage submillimétrique.

6. Procédé selon l'une des revendications précédentes, dans lequel le matériau thermoplastique (3) du premier composant (1) et/ou du deuxième composant (2) présente une température de fusion supérieure à 200 °C.

7. Procédé selon l'une des revendications précédentes, dans lequel le matériau thermoplastique (3) du premier composant (1) et/ou du deuxième composant (2) comprend du PPS, du PEI, du PEEK et/ou du PEKK.

8. Procédé selon l'une des revendications précédentes, dans lequel la matière plastique thermoplastique (3) est respectivement une matière plastique renforcée par des fibres.

9. Procédé selon l'une quelconque des revendications précédentes, dans lequel la fourniture du premier composant (1) comprend la production du premier composant (1) avec le premier tissu déchirable (6) sur la première surface (12) du premier composant (1).

10. Procédé selon la revendication 9, dans lequel le tissu déchirable (6) est formé de plusieurs fils et dans lequel la fabrication du premier composant (1) avec le premier tissu déchirable (6) comprend la sélection d'au moins un valeur pour au moins un paramètre du groupe constitué de l'espacement des fils, du diamètre du fil, de la forme du fil et de la taille des mailles, et sélectionner ou produire comme tissu déchirable (6) un tissu déchirable (6) qui présente les valeurs de paramètres sélectionnées.

11. Procédé selon l'une des revendications précédentes, dans lequel le deuxième composant (2) comprend un deuxième tissu déchirable (6) sur la deuxième surface (13) du deuxième composant (2), et dans lequel en outre le deuxième tissu déchirable (6) est retiré du deuxième composant (2) avant de mettre la première surface (12) du premier composant (1) en contact avec la deuxième surface (13) du deuxième composant (2).

12. Procédé selon la revendication 11, dans lequel la fourniture du deuxième composant (2) comprend la production du deuxième composant (2) avec le tissu déchirable (6) sur la deuxième surface (13) du deuxième composant (2).

13. Utilisation d'un composant qui est formé d'un matériau thermoplastique (3) et qui est fabriqué avec un tissu déchirable (6) sur une surface (12, 13) du composant comme premier composant (1) ou deuxième composant ( 2) selon l'une des revendications précédentes.
